# EUROPEAN PATENT SPECIFICATION

(11) **EP 2 592 841 B1**
(45) Date of publication and mention of the grant of the patent: **01.02.2017**
(21) Application number: 12189488.5
(22) Date of filing: 22.10.2012
(51) Int. Cl.: H04N 13/04, G02B 27/22, G02F 1/133, H04M 1/02, G02F 1/1347

(54) **Display module and mobile terminal having the same**
Anzeigemodul und tragbares Endgerät damit
Module d'affichage et terminal mobile doté de celui-ci

(30) Priority: 25.10.2011 KR 20110109580
(43) Date of publication of application: 15.05.2013
(73) Proprietor: LG Electronics Inc., Yeongdeungpo-Gu Seoul 150-721 (KR)
(72) Inventor: Kim, Yongil, Seoul (KR); Ahn, Wonkee, Gyeonggi-Do (KR); Son, Kyungsoo, Gyeonggi-Do (KR); Kang, Byungsoo, Gyeonggi-Do (KR)
(74) Representative: Cabinet Plasseraud

(56) References cited:
- EP-A1- 1 213 601
- EP-A1- 1 607 788
- EP-A1- 1 901 530
- EP-A1- 2 063 308
- EP-A1- 2 312 375
- JP-A- 2005 077 551
- JP-A- 2005 181 410
- US-A- 6 122 032
- US-A1- 2004 008 251
- US-A1- 2007 058 127
- US-A1- 2009 086 150

## Description

### BACKGROUND OF THE INVENTION

### 1. Field of the Invention

This specification relates to a display module capable of reproducing (playing) two-dimensional (2D) and three-dimensional (3D) images, and a mobile terminal having the same.

### 2. Background of the Invention

A mobile device (mobile terminal, portable device, portable terminal) can be easily carried and have one or more functions such as supporting voice and video telephony calls, inputting and/or outputting information, storing data and the like. As it becomes multifunctional, the mobile terminal can capture still images or moving images, play music or video files, play games, receive broadcast and the like, so as to be implemented as an integrated multimedia player.

Interests in Three-dimensional (3D) images displays are growing, and these trends are leading to the release of various products for implementing such displays.

Three dimensional (3D) images may be divided into a spatial holographic image using holography and a stereoscopic image using an angle difference between left and right images viewed with the eyes. Three dimensional images may be represented by using a parallax barrier as one of the methods implementing the stereoscopy. This parallax barrier method uses a principle which generates a parallax between both a user's eyes by employing a filter forming a vertical slit in front of a display device.

In a display unit for providing 3D stereoscopic image, a part of the display unit changes in colors to cause a problem that images are not properly displayed. An approach for overcoming this problem is disclosed herein. Examples and possible embodiments may be found in EP 2 312 375 A1, US 2004/008251 A1, JP 2005181410 A, JP 2005 077551 A.

### SUMMARY OF THE INVENTION

To overcome the problem of the related art, an aspect of the detailed description is to provide a display module capable of reducing or eliminating a yellowing phenomenon.

To achieve this and other advantages and in accordance with the purpose of this specification, as embodied and broadly described herein, there is provided a display module as specified in claim 1.

In one aspect of the present disclosure, the display module may further include a frame having one surface on which the first panel is stacked, and the support unit may be coupled to a portion adjacent to at least one end of the frame.

In another aspect of the present disclosure, the support unit may include a first extending portion extending in a stacked direction of the first and second panels, and a second extending portion extending from the first extending portion toward the gap, and contacting the second panel.

In yet another aspect of the present disclosure, the first panel may include at least one integrated device, and the support unit may include at least one through hole for insertion of a signal line therethrough to be connected to the integrated device.

In still another aspect of the present disclosure, the support unit may be configured as a pad disposed adjacent to one end of the resin layer between the first and second panels, and the pad may have a preset thickness.

To achieve these and other advantages and in accordance with the purpose of this specification, as embodied and broadly described herein, there is provided a mobile terminal including a terminal body, and a display module mounted onto the terminal body to display image information, wherein the display module may include a first panel configured to implement an image, a second panel having barriers for implementing a three-dimensional image and covering the first panel, a resin layer configured to fill a gap between the first and second panels, and a support unit formed adjacent to at least one end of the resin layer to maintain the gap.

In one aspect of the present disclosure, the support unit may be configured as a pad disposed adjacent to one end of the resin layer between the first and second panels, and the pad may have a preset thickness.

In another aspect of the present disclosure, the display module may further include a frame having one surface on which the first panel is stacked, and the support unit may be coupled to a portion adjacent to at least one end of the frame.

In still another aspect of the present disclosure, the support unit may include a first extending portion extending in a stacked direction of the first and second panels, and a second extending portion extending from the first extending portion toward the gap, and contacting the second panel.

In another aspect of the present disclosure, the second extending portion may be formed to contact both an upper surface of the first panel and a lower surface of the second panel, and an area of the second extending portion contacting the upper surface may be wider than an area of the second extending portion contacting the lower surface.

In yet another aspect of the present disclosure, the first panel may include at least one integrated device, and the support unit may include at least one through hole for insertion of a signal line therethrough to be connected to the integrated device.

In still another aspect of the present disclosure, the signal line may be a flexible printed circuit board having at least one another integrated device.

In another aspect of the present disclosure, a manipulation unit configured to input information in a pressing manner may be formed adjacent to the support unit.

In yet another aspect of the present disclosure, the display module may further include a touch sensing unit stacked on the second panel and having touch-sensitive patterns for sensing touch inputs, and a pad configured to prevent particulates from being introduced between the touch sensing unit and the second panel.

In accordance with at least one exemplary embodiment of the present disclosure, a display module may be configured such that a yellowing phenomenon generated on a specific area of the display module can be removed or eliminated.

Further scope of applicability of the present application will become more apparent from the detailed description given hereinafter. However, it should be understood that the detailed description and specific examples, while indicating preferred embodiments of the invention, are given by way of illustration only.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a front perspective view of a mobile terminal in accordance with one exemplary embodiment;
FIG. 2 is a rear perspective view of the mobile terminal shown in FIG. 1;
FIG. 3 is an exploded view of FIG. 1;
FIG. 4 is a conceptual view showing a stereoscopic imaging method in accordance with one exemplary embodiment;
FIGS. 5A and 5B are conceptual views showing 2D and 3D operating modes of a display module in accordance with one exemplary embodiment;
FIG. 6 is a conceptual view showing portions where a yellowness phenomenon occurs on the display module in accordance with the one exemplary embodiment;
FIG. 7 is a conceptual view showing a display module in accordance with one exemplary embodiment;
FIG. 8 is a conceptual view showing a display module in accordance with a variation of FIG. 7;
FIG. 9 is a sectional view taken along the line IX-IX of FIG. 8;
FIG. 10 is a conceptual view of a display module in accordance with a variation of FIG. 8;
FIG. 11 is a conceptual view of a display module in accordance with another exemplary embodiment;
FIG. 12 is a conceptual view of a display module in accordance with a variation of FIG. 11; and
FIG. 13 is a conceptual view of a display module in accordance with another exemplary embodiment.

### DETAILED DESCRIPTION OF THE INVENTION

Description will now be given in detail of a mobile terminal according to the exemplary embodiments, with reference to the accompanying drawings. For the sake of brief description with reference to the drawings, the same or equivalent components will be provided with the same reference numbers, and description thereof will not be repeated. The expression in the singular form in this specification will cover the expression in the plural form unless otherwise indicated obviously from the context.

Hereinafter, suffixes "module" and "unit or portion" for components used herein in description are merely provided only for facilitation of preparing this specification, and thus they are not granted a specific meaning or function. Hence, it should be noticed that "module" and "unit or portion" can be used together.

Terminals may be implemented using a variety of different types. Examples of such terminals include mobile terminals, such as mobile phones, smart phones, notebook computers, digital broadcast terminals, Personal Digital Assistants (PDA), Portable Multimedia Players (PMP), navigators and the like, and stationary terminals, such as digital TVs, desktop computers and the like.

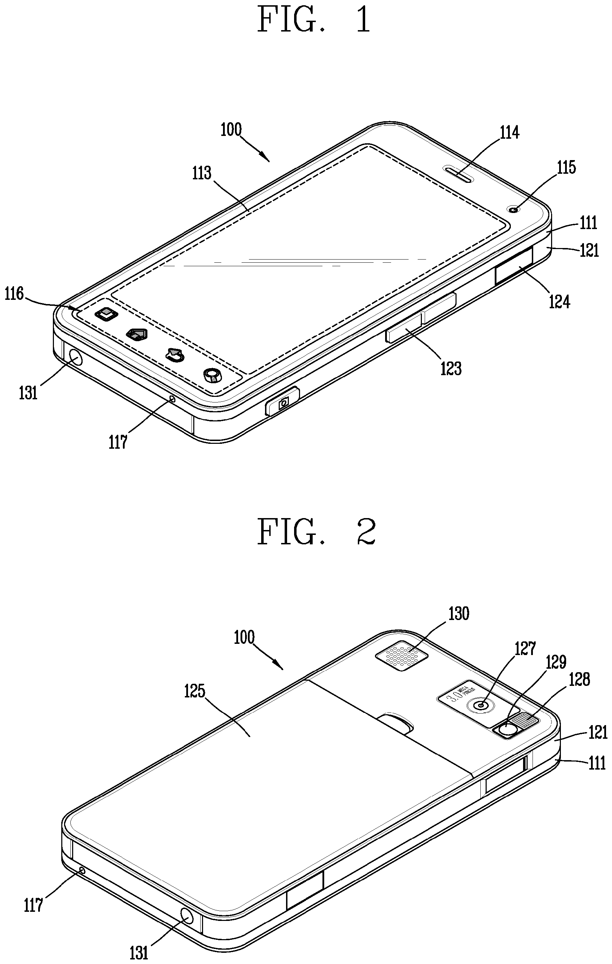

FIG. 1 is a perspective view of a mobile terminal 100 in accordance with one exemplary embodiment. A case (casing, housing, cover, etc.) forming an outer appearance of the main body of the mobile terminal 100 may be formed from a front case 111 and a rear case 121. A space formed by the front case 111 and the rear case 121 may accommodate various electronic components therein. At least one intermediate case may further be disposed between the front case 111 and the rear case 121. Such case may be formed by injection-molded synthetic resin, or may be formed using a metallic material such as stainless steel (STS) or titanium (Ti).

The front case 111 is shown having a display unit 113, a first audio output module 114, a first image input unit 115, a first manipulation unit 116, an audio input unit 117 and the like.

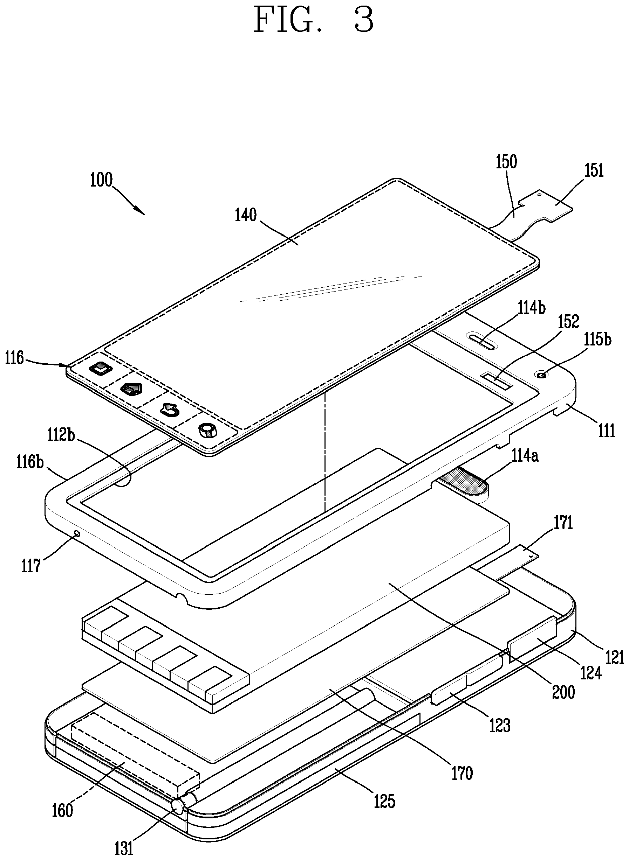

The display unit 113 may include a display module 200 (see FIG. 3), such as a Liquid Crystal Display (LCD) module, an Organic Light-Emitting Diode (OLED) module and the like to display visible information. The display unit 113 may be implemented as a touch screen so as to allow inputting of information by a user's touch. The first audio output module 114 may include a receiver, a speaker or the like. The first image input unit 115 may be a camera module for capturing images or video of the user and the like. The first manipulation unit 116 may be manipulated to allow inputting of commands for controlling operations of the mobile terminal 100. The first manipulation unit 116 may be a key region formed to be sensitive to a touch input by a user on a window. The audio input unit 117 may be implemented, for example, as a type of microphone for receiving voice or other sounds input by the user.

The rear case 121 of the mobile terminal 100 may further be provided with a second manipulation unit 123, an interface unit 124, a power supply unit 125 and the like. The second manipulation unit 123 may be installed at a side surface of the rear case 112. The first and second manipulation units 116 and 123 may be referred to as a manipulating portion. Such manipulating portion can employ any tactile manner that a user can touch or tap for manipulation. For instance, the manipulating portion may be implemented as a dome switch, a touchpad or the like by which a user can input commands or information in a pushing or touching manner. Alternatively, the manipulating portion may be implemented as a wheel or a jog which rotates keys or a joystick.

From the functional perspective, the first manipulation unit 116 is configured to input commands such as START, END or the like, and the second manipulation unit 123 can be a hot key which performs a specific function, such as activating the first image input unit 115, as well as a scroll function. Upon employing at least the first and second manipulation units 116 and 123, inputting of telephone numbers or text messages may be executed using a touch screen disposed on the display unit 113.

The interface unit 124 may serve as a path for allowing data exchange between the mobile terminal and an external device. For example, the interface unit 124 may be at least one of wired/wireless earphone ports, ports for short-range communication (e.g., IrDA, Bluetooth, WLAN, etc.), power supply terminals for power supply to the mobile terminal and the like. The interface unit 124 may be a card socket for coupling to external cards, such as a Subscriber Identity Module (SIM), a User Identity Module (UIM), a memory card for storage of information and the like.

The power supply unit 125 may be provided at the rear case 121 to supply power to at least one component of the mobile terminal 100. The power supply unit 125, for example, may include a rechargeable battery for supplying power.

FIG. 2 is a rear perspective view of the mobile terminal 100 shown in FIG. 1. Referring to FIG. 2, the rear case 112 is shown as having a second image input unit 127, a second audio output module 130, a broadcast signal receiving antenna 131 and the like. The second image input unit 127 faces a direction which is opposite to a direction faced by the first image input unit 115 (see FIG. 1), and may have different pixels from those of the first image input unit 115. For example, the first image input unit 115 may operate with relatively lower pixels (lower resolution). Thus, the first image input unit 115 may be useful when a user captures his face and sends it to another party during a video call or the like. On the other hand, the second image input unit 127 may operate with relatively higher pixels (higher resolution) such that it can be useful for a user to obtain higher quality pictures for later use.

A flash 128 and a mirror 129 may additionally be disposed adjacent to the second image input unit 127. The flash 129 operates in conjunction with the second image input unit 127 when taking a picture using the second image input unit 127. The mirror 129 can cooperate with the second image input unit 127 to allow a user to photograph himself in a self-portrait mode.

The second audio output module 130 can cooperate with the first audio output module 114 (see FIG. 1) to provide stereo output. Also, the audio output module 130 may be configured to operate as a speakerphone.

A broadcast signal receiving antenna 131 may be disposed at one side of the rear case 121 in addition to an antenna for communications. The antenna 131 may be drawn out of the rear case 121.

As described above, it has been described that the first manipulation unit 116 or the like is disposed at the front case 111 and the second manipulation unit 123 or the like is disposed at the rear case 121; however, the present disclosure may not be limited to the configuration. For example, the second manipulation unit 123 may be disposed at the front case 111 in the vicinity of the first manipulation unit 116. In addition, without the second image input unit 127, the first image input unit 115 can be implemented to be rotatable so as to rotate up to a direction which the second image input unit 127 faces.

FIG. 3 is a disassembled perspective view of the mobile terminal 100 of FIG. 1. As shown in FIG. 3, a window 140 may be coupled to obscure one surface of the front case 111. The window 140 may obscure a display module 200 such that visible information output on the display module 200 can be recognized from the exterior. The display module 200 and the window 140 may configure the display unit 113 (see FIG. 1).

The window 140 may be allowed for recognition of user's touch input and for inputting of information (commends, signals, etc.). The window 140 may have an area corresponding to that of the display module 200. The window 140 may be formed of a transparent material. The window 140 may have a completely opaque area or an area with extremely low light transmittance. For example, edges of the window 140 may be surface-processed such that light cannot be transmitted therethrough.

The front case 111 may be provided with a manipulation pad corresponding to the first manipulation unit 116 (see FIG. 1). The manipulation pad is a target to be touched or pressed by a user. The manipulation pad may be formed as a manipulation area at a portion of the window 140.

The front case 111 may include a sound hole 114b, a window hole 112b and an image window. The sound hole 114b may be formed to correspond to the audio output module 114, such that sounds of the mobile terminal, for example, ringtone, music and the like can come therethrough. The window hole 112b may be formed to correspond to the display unit 113. The transparent image window may be formed to correspond to the first image input unit 115 (see FIG. 1).

The rear case 121 is shown having a circuit board 170, the display module 200, a speaker module 114a, a camera module 115a, a switch and the like. A circuit board 170 may be implemented as one example of a controller for running various functions of the mobile terminal 100. The circuit board 170 may detect an electrical change, which is generated due to a user's touch on the window 140, for example, a change in capacitance or the quantity of electric charges.

An electrode may be installed within the window 140. The electrode may be formed as a conductive pattern. The electrode may be charged with electric charges. When an electric conductor moves within a close distance, the quantity of electric charges being charged can change accordingly. When an electric conductor, for example, a user's finger touches the window, the quantity of electric charges being charged in the electrode may change, which is eventually the same as the change in capacitance between the finger and the electrode.

The electrode of the window 140 may be electrically connected to the controller, for example, the circuit board 170, for detecting changes in the quantity of electric charges. For the electrical connection, a flexible printed circuit board 150 may be connected to the circuit board 170 via a hole 152 (see FIG. 3). As the change in the quantity of electric charges is detected, the circuit board 170 may change a state of at least one function relating to the mobile terminal 100.

The flexible printed circuit board 150 may extend from one end of the window 140. A connecting portion 151 may be formed at one end of the flexible printed circuit board 150 to be connected to the electrode. The other end of the flexible printed circuit board 150 may be connected to the circuit board 170 via a connector. The connecting portion 151 may be formed of a metal so as to maintain a preset stiffness and elasticity.

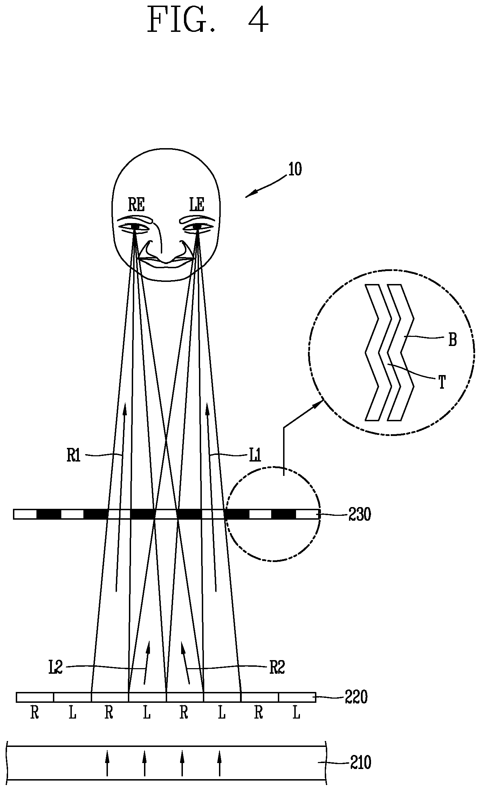

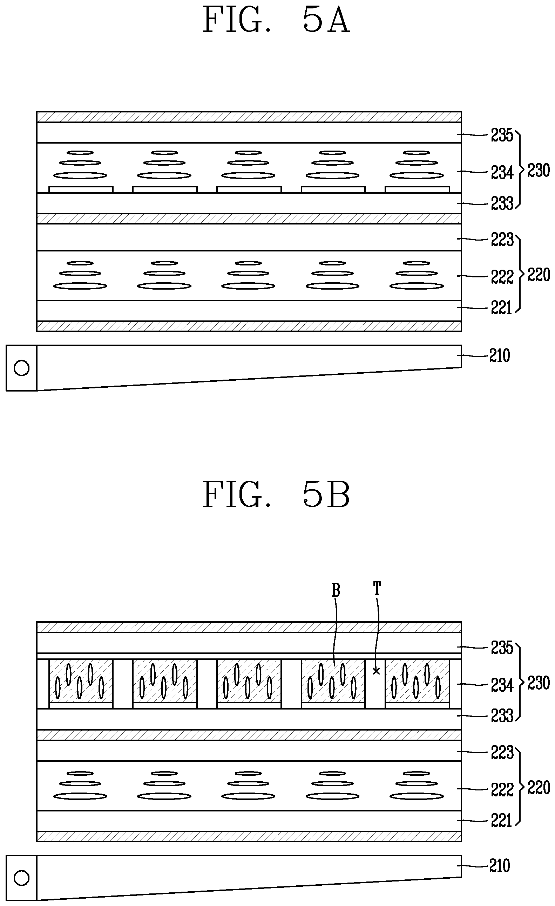

FIG. 4 is a conceptual view showing a stereoscopic imaging method in accordance with one exemplary embodiment, and FIGS. 5A and 5B are conceptual views showing 2D and 3D operating modes of a display module in accordance with one exemplary embodiment.

A display module 200 in accordance with one exemplary embodiment may include a first panel 220 and a second panel 230. Here, components such as a case or a driving unit are omitted, but it should be understood that they are also essential to implement the present disclosure. The first panel 220 may alternately have a left-eye pixel L for displaying image information for the left eye and a right-eye pixel R for displaying image information for the right eye.

A backlight unit 210 for emitting light may be disposed behind a rear surface of the first panel 220.The backlight unit 210 may be used as a source of an image, which is provided to a user via the first panel 220 and the second panel 230. The backlight unit 210 may be disposed to surround an outer surface of a first substrate 221 of the first panel 220 and a side surface of the first panel 220, providing light to the first panel 220 via a light guide plate. The backlight unit 210 may include a light guide plate, a light source, a reflection plate and an optical sheet. Especially, the light source may be configured by using PDP, OLED, LED, cold-cathode tube, and devices having such function, but the present disclosure may not be limited to them. Various technologies associated with the backlight unit 210 are been known, so detailed description thereof will be omitted.

The second panel 230, which is a parallax panel, may be located between the first panel 220 and an observer 10 or between the first panel 220 and the backlight unit 210 to allow for light transmission or light blocking based on each position. Here, the parallax second panel 230 may have a structure with a slit area T and a barrier area B alternately formed thereon to selectively transmit and block light transmitted through the left/right-eye pixels L/R.

Light L1, which has been transmitted through the left-eye pixel L of the first panel 220, among light emitted from the backlight unit 210, reaches the left eye (LE) of the observer 10 via the slit area T of the parallax second panel 230, and light R1 transmitted through the right-eye pixel R of the first panel 220 reaches the right eye (RE) of the observer 10 via the slit area T of the parallax second panel 230. An image, which is displayed through the respective left and right-eye pixels, may include parallax information, which is enough for human to sense. Accordingly, the observer 10 recognizes a 3D stereoscopic image.

The second panel 230 may allow light transmission through an entire surface thereof without any operation in a 2D mode. However, in a 3D mode, the second panel 230 may be divided into a transparent zone serving as a slit T for allowing light transmission and a barrier zone serving as a barrier B for blocking light, which are in a stripe form.

As shown in FIGS. 5A and 5B, the first panel 220 may include a pair of first and second substrates 221 and 223 bonded to each other with a liquid crystal layer 222 interposed therebetween.

A plurality of pixels may be arranged with directionality between the pair of substrates 221 and 223. A transparent pixel electrode of the first substrate 221 and a transparent common electrode of the second substrate 223, which face each other with interposing the liquid crystal therebetween, may be located on each of the pixels.

Among those electrodes, the pixel electrode may receive an image signal voltage, which is selectively applied to the pixel electrode by a Thin Film Transistor (TFT) provided in an one-to-one correspondence with the electrode. In addition, to correspond to each pixel, the second substrate 223 may include Red, Green, Blue (RGB) color filters provided in correspondence with each pixel, and black matrixes filled in intervals among the filters. The common electrode may be formed to cover them.

With the configuration, when the image signal voltage is applied to the pixel electrode of a pixel, which is selected by a switching operation of the TFT, a voltage difference may be generated between the corresponding pixel electrode and the common electrode. This may drive liquid crystal molecules each having optical anisotropy and polarizing property, resulting in a difference of transmittance. As light from the backlight unit 210 is transmitted through the first panel 220, various flat (planar) color images are displayed due to transmittance difference for each pixel and color combination of the RGB color filters. Here, the first panel 220 has exemplarily been illustrated as an LCD panel, but may alternatively be implemented by using a cathode ray tube, a plasma display panel, an OLED display panel and other types of display panels.

The second panel 230 may include first and second barrier substrates 233 and 235 bonded to each other with a second liquid crystal layer 234 interposed therebetween. However, unlike the first panel 220, a transparent barrier electrode may be disposed on an inner surface of the first barrier substrate 233 and a transparent common electrode may be provided at the second barrier substrate 235, irrespective of pixels. Here, the barrier electrode may receive a liquid crystal driving voltage applied only in a 3D mode when the liquid crystal layer 234 is a twisted nematic (TN) liquid crystal layer.

The display module 200, for example, may also include polarizers, which are attached onto an outer surface of the second substrate 223 of the first panel 220, between the first panel 220 and the second panel 230, and onto a rear surface of the first barrier substrate 233 of the second panel 230.

Accordingly, in the 2D mode shown in FIG. 5Ain which a voltage is not applied to the barrier electrode of the second panel 230, the display module 200 having the second panel 230 maintains a normal white state over an entire surface of the second panel 230 for simple transmission of light emitted from the backlight unit 210. This may allow the observer to view a flat image on the first panel 220. Herein, the normal white state has merely been illustrated, but the normal white state or a normal black state may be selected according to a 2D or 3D displaying rate.

On the contrary, in a 3D mode shown in FIG. 5B in which a liquid crystal driving voltage is applied to the barrier electrode, only liquid crystals located between the barrier electrode and the common electrode are driven, and accordingly the corresponding portion is displayed with a black color so as to define a barrier-zone for blocking light, and a portion between the barrier-zones is displayed with a white color to define a transparent zone for allowing light transmission. Consequently, the barrier-zone and the transparent zone may act as a barrier area B and a slit area T, respectively, whereby the observer may recognize an image on the first panel 220 as a 3D image.

As such, the display module 200 may be converted to display an image in the 2D and 3D modes by virtue of an ON/OFF operation of the barrier electrode of the second panel 230.

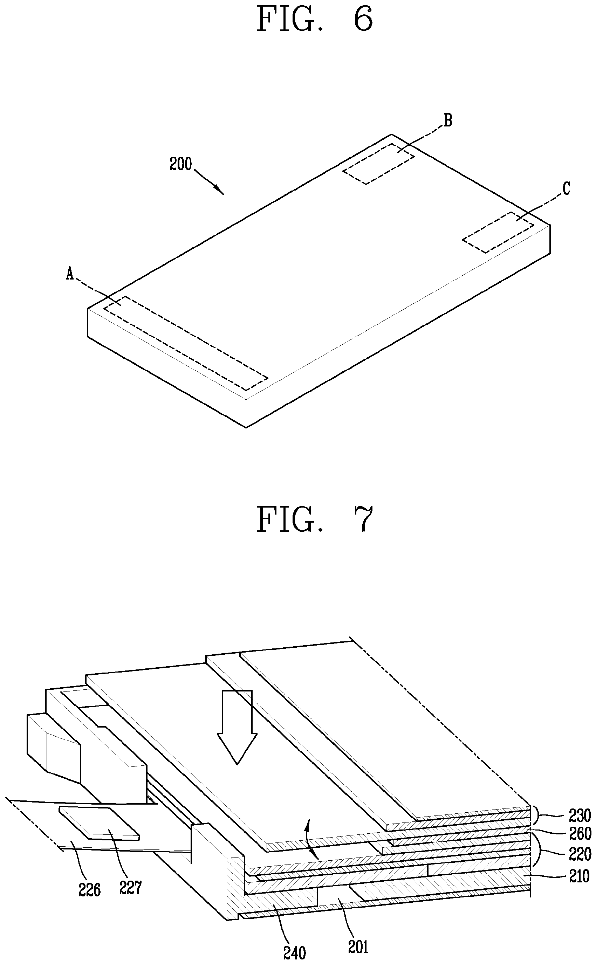

FIG. 6 is a conceptual view showing portions where a yellowing phenomenon occurs on the display module in accordance with the one exemplary embodiment, and FIG. 7 is a conceptual view showing a display module in accordance with one exemplary embodiment.

A yellowing phenomenon indicates that a part of a display unit changes in color and accordingly an image is not properly displayed on the corresponding part. The yellowing phenomenon may also be broadly construed. The yellowing may also indicate that a 3D image is not output with proper colors when an image is converted from a 2D image into a 3D image, even though the image is usually output in a normal (proper) state.

As shown in FIG. 6, the yellowing may occur at areas A, B and C adjacent to each end of the display module 200. As one example, the area A may be a lower area of the display unit where a first manipulation unit is disposed, and the areas B and C may be areas where coupling members are located for assembling the display module.

The yellowing may be caused due to external pressure applied to a specific portion of the display module 200, or concentration of unexpected stress onto a specific portion upon assembling the display module 200. That is, as shown in FIG. 7, as a specific portion of the second panel 230 is pressed down due to pressure applied, the pressure may be transferred to a resin layer 260 located between the second panel 230 and the first panel 220. This may cause the yellowing.

Referring to FIG. 7, a display module 200 according to one exemplary embodiment may include a first panel 220, a resin layer 260, a second panel 230 and a support unit 240.

The first panel 220 may include a pair of first and second substrates 221 and 223 bonded to each other with a liquid crystal layer 222 interposed therebetween to implement a 2D image, and polarizers. The second panel 230 may be stacked to cover the first panel 220 so as to implement a 3D image. The second panel 230 as a barrier liquid crystal panel may include first and second substrates 233 and 235 bonded to each other with a second liquid crystal layer 234 interposed therebetween, and polarizers.

The resin layer 260 may fill a gap between the first panel 220 and the second panel 230. The resin layer 260 may be implemented by using UV resin or Super view Resin (SVR). The resin layer 260 may be in a liquid state until before being hardened, and may change when pressure is applied onto a specific portion even after being hardened.

A backlight unit 210 and a frame 201 may be formed on a lower end of the first panel 220. The support unit 240, which defines a side appearance of the display module 200 may be formed on the frame 201.

Referring back to FIG. 6, the yellowing may be generated on the areas A, B and C adjacent to each end of the display module 200, accordingly, the support unit 240 may be formed at each of the ends.

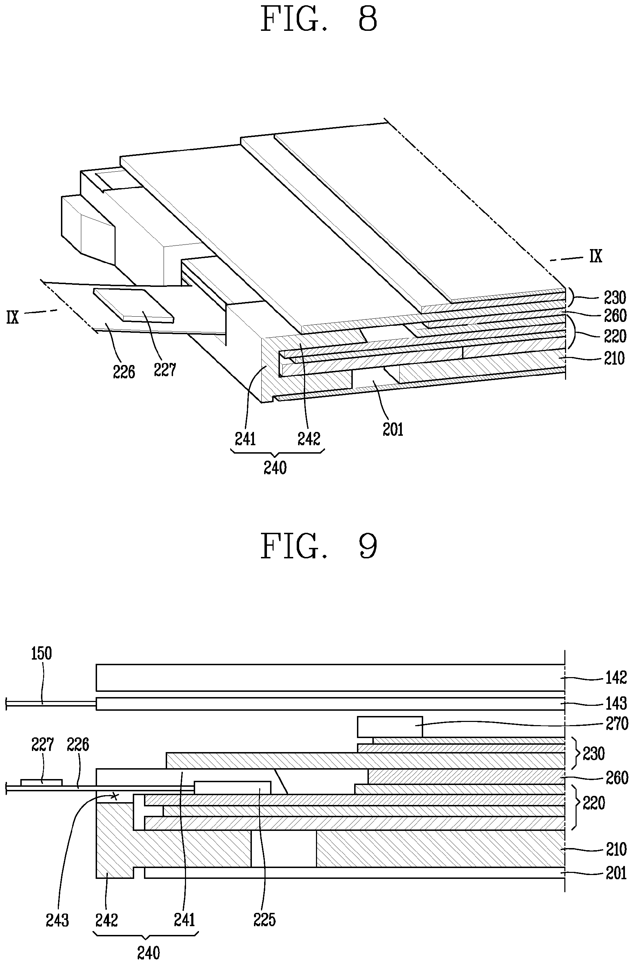

FIG. 8 is a conceptual view showing a display module 200 in accordance with a variation of FIG. 7, and FIG. 9 is a sectional view taken along the line IX-IX of FIG. 8. As shown in FIG. 8, the support unit 240 may be attached onto the frame 201, to be adjacent to one end portion of the resin layer 260.

The support unit 240 may include a first extending portion 241 and a second extending portion 242. The first extending portion 241 may extend in a stacked direction of the panels 220 and 230, thereby defining a side appearance of the display module 200. The first extending portion 241 may support a lateral weight applied to each component of the display module 200.

The second extending portion 242 may extend from the first extending portion 241 toward the gap between the first panel 220 and the second panel 230. At least part of the second extending portion 242 may contact a lower surface of the second panel 230, and support a weight applied from the second panel 230 toward the first panel 220.

One end of the second extending portion 242 which extends toward the gap may get wider as it extedns downwardly. Accordingly, it may have a trapezoidal cross section. That is, an area of the second extending portion 242 contacting an upper surface of the first panel 220 may be wider than an area of the second extending portion 242 contacting a lower surface of the second panel 230. This may facilitate an assembling operation and increase stability upon coupling.

At least one integrated device 225 may be formed on the upper surface of the first panel 220. The integrated device 225 may be a driver Integrated Circuit (IC) for controlling images displayed on the first panel 220. The driver IC may be connected to the circuit board 170 via a signal line 226. The signal line 226 may be a Flexible Printed Circuit (FPC) signal line or a Chip On Film (COF) signal line. Also, the signal line 226 may include another integrated device 227. The signal line 226 and a connecting portion 150 may be connected to each other. This may simplify the configuration of the terminal. The support unit 240 may include a through hole 243 for insertion of the signal line 226 therethrough.

Referring to FIG. 9, a touch sensing unit 143 may be formed to cover the second panel 230. The touch sensing unit 143 may include a plurality of transparent electrode patterns to sense touch inputs. The touch sensing unit 143 may be coupled to a window 142 by use of an inter-layer adhesive. The inter-layer adhesive may be a transparent adhesive, and implemented by using an Optically Clear Adhesive (OCA) and the like, for example.

The window 142 may be formed of a transparent material, for example, a light transmittable (transparent) synthetic resin, tempered glass and the like. Also, the window 142 may also include an opaque portion. A touch controller for overall driving or control of the touch sensing unit 143 may be connected to the touch sensing unit 143 via a signal line.

A gap may be present between the touch sensing unit 143 and the second panel 230. A pad 270 may be provided for preventing an introduction of particulates into the gap. The pad 270 may be formed of synthetic resin and have a predetermined thickness. The pad 270 may be compressible when the display module 200, the window 142 and the like are assembled to the mobile terminal. When being compressed, the pad 270 may cover the gap between the touch sensing unit 143 and the second panel 230.

As the pad 270 is compressed, elastic energy may be stored therein. Accordingly, a force desired to be expanded may press the display module 200. Since the pressing may cause the yellowing phenomenon, the support unit 240 may preferably be formed adjacent to the pad 270. Here, the pad 270 may be formed on an upper surface of the second panel 230, and the support unit 240 may support the second panel 230 on the lower surface of the second panel 230.

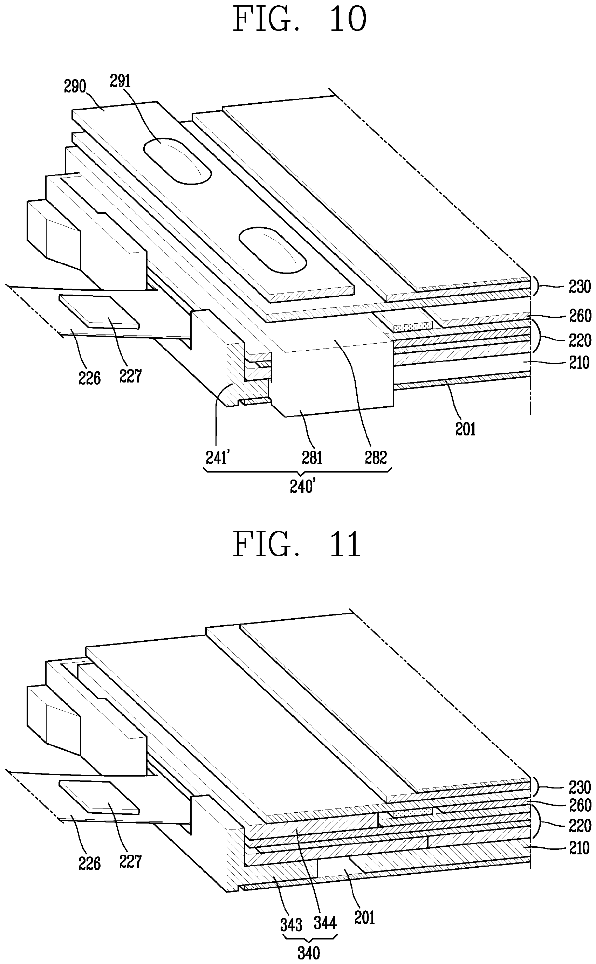

FIG. 10 is a perspective view of a display module in accordance with a variation of FIG. 8. A support unit 240' may include a supporting frame 241' for supporting an upper end or a lower end of the display module, and extending members coupled to one end of the display module and extending toward the gap between the first panel 220 and the second panel 230.

The extending members may include a first extending member 281 and a second extending member 282. The first extending member 281 may extend in a direction that the panels 220 and 230 are stacked on each other (i.e., in a thickness direction), defining a side appearance of the display module 200.

The second extending member 282 may extend from the first extending member 281 toward the gap between the first panel 220 and the second panel 230. At least part of the second extending member 282 may contact the lower surface of the second panel 230 and support a weight applied from the second panel 230 toward the first panel 220.

A key manipulation unit for inputting information in a pressing manner may be formed on a front surface of the mobile terminal. The key manipulation unit may include an actuator attached onto a lower portion of a key body, and a dome part 290 contacting the actuator. The dome part 290 may include at least one conductive dome 291. That is, the dome part, which generates a signal in response to push pressure, may be formed on the second panel covering the at least part of the second extending portion 282.

With the key manipulation unit, a part of the display module 200 adjacent to the key manipulation unit may be affected by pressure. This may cause the yellowing. However, as mentioned previously, the yellowing may be prevented by the presence of the support unit 240. Therefore, even if the key manipulation unit is formed adjacent to the display module 200, the yellowing generated on the display unit may be reduced or prevented by virtue of the the support unit 240. Here, the key manipulation unit may be disposed to press at least part of the upper surface of the second panel 230, and the support unit 240 may support at least part of the lower surface of the second panel 230.

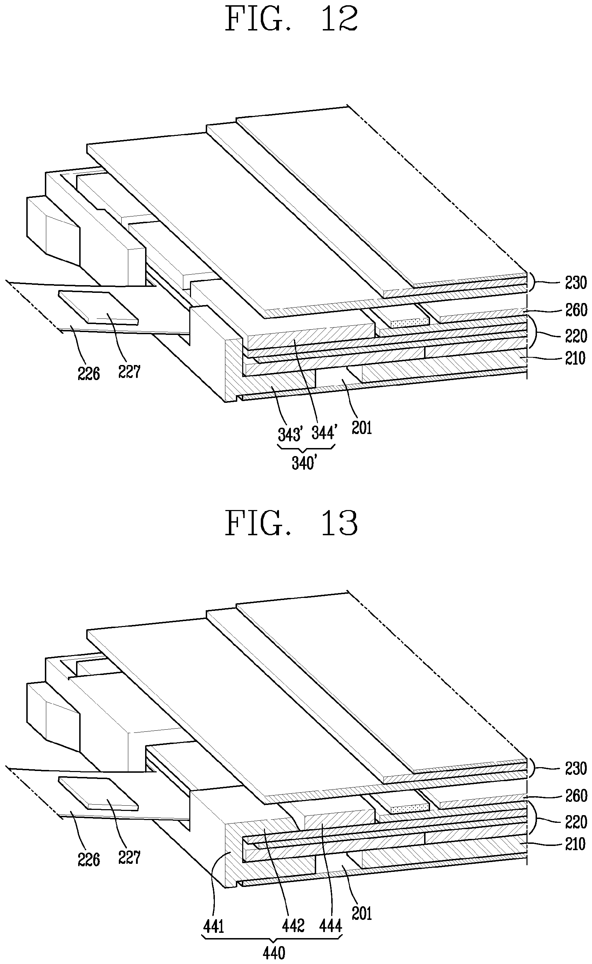

FIG. 11 is a perspective view of a display module in accordance with another exemplary embodiment, and FIG. 12 is a perspective view of a display module in accordance with a variation of FIG. 11. In accordance with another exemplary embodiment, the configuration of a display module may be the same as that of the previous exemplary embodiment, except for a shape of a support unit.

Referring to FIG. 11, a support unit 340 may include a supporting frame 343 to support one of an upper end or a lower end of the display module, and a supporting pad 344 disposed adjacent to one end of a resin layer 260 between the first panel 220 and the second panel 230 and having a preset thickness. The supporting pad 344 may be formed of synthetic resin, which may be advantageous in a molding process. The supporting pad 344 may also be formed such that an area thereof contacting the upper surface of the first panel 220 can be larger than an area contacting the lower surface of the second panel 230. This may result in facilitation of an assembling operation and an increase in stability upon coupling.

The supporting pad 344 may be disposed to cover a driver IC, and thus have a space for receiving the driver IC therein. The supporting pad 344 may also include a groove through which a signal line is inserted such that the driver IC and the signal line can be connected to each other. Referring to FIG. 12, a supporting pad 344' may be provided in plurality. The plurality of supporting pads 344' may be formed of different materials from each other.

FIG. 13 is a perspective view of a display module in accordance with another exemplary embodiment. A support unit 440 may include a first supporting part having a first extending portion 441 and a second extending portion 442, and a second supporting part having at least one supporting pad 444. Here, the first supporting part may be formed to support a part of the second panel, and the second supporting part may be formed to support another part of the second panel. Here, the first supporting part and the second supporting part may be formed such that portions thereof fill the gap and may contact each other.

The foregoing embodiments and advantages of the display module and the mobile terminal having the same are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims are therefore intended to be embraced by the appended claims.

## Claims

1. A mobile terminal comprising:
a terminal body;
a display module (200) mounted onto the terminal body and configured to display image information;
a window (142) configured to cover a surface of the display module; and
a touch sensing unit (143) disposed between the display module and the window for sensing touch inputs,
a key manipulation unit for inputting information in a pressing manner;
**characterized in that** the display module comprises:
a first panel (220) configured to implement a three-dimensional (3D) image;
a second panel (230) having barriers configured to implement a three-dimensional image, the second panel is configured to cover the first panel;
a resin layer (260) configured to fill a gap between the first and second panels;
a support unit (240) formed adjacent to at least one end of the resin layer to maintain the gap, and
wherein the support unit (240) comprises:
a first extending portion (241) extending in a stacked direction of the first and second panels; and
a second extending portion (242) extending from the first extending portion toward the gap and filling at least part of the gap, the second extending portion contacting the second panel;
wherein the key manipulation unit has a dome part (290) for generating a signal by push pressure which is formed on a portion of an upper surface of the second panel which covers at least part of the second extending portion,
wherein the support unit is configured to support the second panel on the lower surface of the second panel.

2. The terminal of claim 1, wherein the display module further comprises a frame (201) having one surface on which the first panel is stacked, and
wherein the support unit is coupled to a portion adjacent to at least one end of the frame.

3. The terminal of claim 2, wherein the support unit is a supporting pad (344, 344') disposed adjacent to one end of the resin layer between the first and second panels, the pad having a preset thickness.

4. The terminal of claim 3, wherein the supporting pad is provided in plurality.

5. The terminal of claim 1, wherein the second extending portion is formed to contact both an upper surface of the first panel and a lower surface of the second panel, and
wherein an area of the second extending portion contacting the upper surface is greater than an area of the second extending portion contacting the lower surface.

6. The terminal of claim 2, wherein the support unit comprises:
a first extending portion extending in a stacked direction of the first and second panels;
a second extending portion extending from the first extending portion toward the gap, the second extending portion contacting the second panel; and
a supporting pad (444) disposed adjacent to one end of the resin layer between the first and second panels, the supporting pad (444) having a preset thickness.

7. The terminal of any one of claims 1 to 6, further comprising at least one integrated device (225) on the first panel; and
a signal line (226) being connected to the at least one integrated device;
wherein the support unit comprises at least one through hole for insertion of the signal line.

8. The terminal of claim 7, wherein the signal line is a flexible printed circuit board having at least one second integrated device.

9. The terminal of claim 2, wherein the support unit further comprises:
a supporting frame formed on one of an upper end or a lower end of the display module.

## Patentansprüche

1. Mobiles Endgerät, das aufweist:
einen Endgerätkörper;
ein Anzeigemodul (200), das auf den Endgerätkörper montiert ist und konfiguriert ist, um Bildinformationen anzuzeigen;
ein Fenster (142), das konfiguriert ist, um eine Oberfläche des Anzeigemoduls zu bedecken; und
eine Berührungsabtasteinheit (143), die zwischen dem Anzeigemodul und dem Fenster angeordnet ist, um Berührungseingaben abzutasten;
eine Tastenbetätigungseinheit zum Eingeben von Informationen in einer drückenden Weise;
**dadurch gekennzeichnet, dass** das Anzeigemodul aufweist:
ein erstes Feld (220), das konfiguriert ist, um ein dreidimensionales (3D-) Bild zu implementieren;
ein zweites Feld (230) mit Barrieren, das konfiguriert ist, um ein dreidimensionales Bild zu implementieren, wobei das zweite Feld konfiguriert ist, um das erste Feld zu bedecken;
eine Harzschicht (260), die konfiguriert ist, um eine Lücke zwischen den ersten und zweiten Feldern zu füllen;
eine Halteeinheit (240), die benachbart zu wenigstens einem Ende der Harzschicht ausgebildet ist, um die Lücke aufrecht zu erhalten, und
wobei die Halteeinheit (240) aufweist:
einen ersten Ausdehnungsabschnitt (241), der sich in einer Stapelrichtung der ersten und zweiten Felder erstreckt; und
einen zweiten Ausdehnungsabschnitt (242), der sich von dem ersten Ausdehnungsabschnitt in Richtung der Lücke erstreckt und wenigstens einen Teil der Lücke füllt, wobei der zweite Ausdehnungsabschnitt das zweite Feld berührt;
wobei die Tastenbetätigungseinheit einen Kuppelteil (290) hat, der auf einem Abschnitt einer oberen Oberfläche des zweiten Felds, der wenigstens einen Teil des zweiten Ausdehnungsabschnitts bedeckt, ausgebildet ist, um durch einen drückenden Druck ein Signal zu erzeugen,
wobei die Halteeinheit konfiguriert ist, um das zweite Feld auf der unteren Oberfläche des zweiten Felds zu halten.

2. Endgerät nach Anspruch 1, wobei das Anzeigemodul ferner einen Rahmen (201) mit einer Oberfläche aufweist, auf welche das erste Feld gestapelt ist, und
wobei die Halteeinheit mit einem Abschnitt benachbart zu wenigstens einem Ende des Rahmens gekoppelt ist.

3. Endgerät nach Anspruch 2, wobei die Halteeinheit ein Halteblock (344, 344') ist, der benachbart zu einem Ende der Harzschicht zwischen den ersten und zweiten Feldern angeordnet ist, wobei der Block eine vorgegebene Dicke hat.

4. Endgerät nach Anspruch 3, wobei der Halteblock mehrfach bereitgestellt ist.

5. Endgerät nach Anspruch 1, wobei der zweite Ausdehnungsabschnitt ausgebildet ist, um sowohl eine obere Oberfläche des ersten Felds als auch eine untere Oberfläche des zweiten Felds zu berühren, und
wobei eine Fläche des zweiten Ausdehnungsabschnitts, der die obere Oberfläche berührt, größer als eine Fläche des zweiten Ausdehnungsabschnitts ist, der die untere Oberfläche berührt.

6. Endgerät nach Anspruch 2, wobei die Halteeinheit aufweist:
einen ersten Ausdehnungsabschnitt, der sich in einer Stapelrichtung der ersten und zweiten Felder erstreckt;
einen zweiten Ausdehnungsabschnitt, der sich von dem ersten Ausdehnungsabschnitt in Richtung der Lücke erstreckt, wobei der zweite Ausdehnungsabschnitt das zweite Feld berührt; und
einen Halteblock (444), der benachbart zu einem Ende der Harzschicht zwischen den ersten und zweiten Feldern angeordnet ist, wobei der Halteblock (444) eine vorgegebene Dicke hat.

7. Endgerät nach einem der Ansprüche 1 bis 6, das ferner wenigstens eine integrierte Vorrichtung (225) auf dem ersten Feld aufweist; und
eine Signalleitung (226), die mit der wenigstens einen integrierten Vorrichtung verbunden ist;
wobei die Halteeinheit wenigstens ein Durchgangsloch für das Einsetzen der Signalleitung aufweist.

8. Endgerät nach Anspruch 7, wobei die Signalleitung eine flexible Leiterplatte mit wenigstens einer zweiten integrierten Vorrichtung ist.

9. Endgerät nach Anspruch 2, wobei die Halteeinheit ferner aufweist:
einen Halterahmen, der auf einem oberen Ende oder einem unteren Ende des Anzeigemoduls ausgebildet ist.

## Revendications

1. Terminal mobile comprenant :
un corps de terminal ;
un module d'affichage (200) monté sur le corps de terminal et configuré pour afficher des informations d'image ;
une fenêtre (142) configurée pour recouvrir une surface du module d'affichage ; et
une unité de détection tactile (143) disposée entre le module d'affichage et la fenêtre de détection d'entrées tactiles,
une unité de manipulation de touche pour entrer des informations d'une manière par pression ;
**caractérisé en ce que** le module d'affichage comprend :
un premier panneau (220) configuré pour implémenter une image tridimensionnelle (3D) ;
un second panneau (230) ayant des barrières configurées pour implémenter une image tridimensionnelle, le second panneau est configuré pour recouvrir le premier panneau ;
une couche de résine (260) configurée pour remplir un intervalle entre les premier et second panneaux ;
une unité support (240) formée de manière adjacente à au moins une extrémité de la couche de résine pour maintenir l'intervalle, et
dans lequel l'unité support (240) comprend :
une première partie d'extension (241) s'étendant dans une direction d'empilage des premier et second panneaux ; et
une seconde partie d'extension (242) s'étendant depuis la première partie d'extension vers l'intervalle et remplissant au moins en partie l'intervalle, la seconde partie d'extension étant en contact avec le second panneau ;
dans lequel l'unité de manipulation de touche a une partie bombée (290) pour générer un signal par une pression de poussée qui est formée sur une partie d'une surface supérieure du second panneau qui recouvre au moins en partie la seconde partie d'extension,
dans lequel l'unité support est configurée pour supporter le second panneau sur la surface inférieure du second panneau.

2. Terminal mobile selon la revendication 1, dans lequel le module d'affichage comprend en outre un cadre (201) ayant une surface sur laquelle le premier panneau est empilé, et
dans lequel l'unité support est couplée à une partie adjacente à au moins une extrémité du cadre.

3. Terminal selon la revendication 2, dans lequel l'unité support est un pavé support (344, 344') disposé de manière adjacente à une extrémité de la couche de résine entre les premier et second panneaux, le pavé ayant une épaisseur prédéfinie.

4. Terminal mobile selon la revendication 3, dans lequel le pavé support est présent en très grand nombre.

5. Terminal mobile selon la revendication 1, dans lequel la seconde partie d'extension est formée pour être en contact à la fois avec la surface supérieure du premier panneau et avec une surface inférieure du second panneau, et
dans lequel une zone de la seconde partie d'extension étant en contact avec la surface supérieure est plus grande qu'une zone de la seconde partie d'extension étant en contact avec la surface inférieure.

6. Terminal mobile selon la revendication 2, dans lequel l'unité support comprend :
une première partie d'extension s'étendant dans une direction empilée des premier et second panneaux ;
une seconde partie d'extension s'étendant depuis la première partie d'extension vers l'intervalle, la seconde partie d'extension étant en contact avec le second panneau ; et
un pavé support (444) disposé de manière adjacente à une extrémité de la couche de résine entre les premier et second panneaux, le pavé support (444) ayant une épaisseur prédéfinie.

7. Terminal mobile selon l'une quelconque des revendications 1 à 6, comprenant en outre au moins un dispositif intégré (225) sur le premier panneau ; et
une ligne de signaux (226) étant connectée à l'au moins un dispositif intégré ;
dans lequel l'unité support comprend au moins un trou débouchant pour l'insertion de la ligne de signaux.

8. Terminal mobile selon la revendication 7, dans lequel la ligne de signaux est une carte de circuit imprimé flexible ayant au moins un second dispositif intégré.

9. Terminal mobile selon la revendication 2, dans lequel l'unité support comprend en outre :
un cadre de support formé sur l'une parmi une extrémité supérieure ou une extrémité inférieure du module d'affichage.
